# EUROPÄISCHE PATENTANMELDUNG

(11) **EP 1 855 079 A2**
(43) Veröffentlichungstag der Anmeldung: **14.11.2007**
(21) Anmeldenummer: 07008700.2
(22) Anmeldetag: 27.04.2007
(51) Int. Cl.: G01B 3/20

(54) **Haltevorrichtung zur Anordnung eines Längenmessinstruments im Raum**

(30) Priorität: 13.05.2006 DE 102006022439
(71) Anmelder: Eisinger, Manfred, 71229 Leonberg (DE)
(72) Erfinder: Eisinger, Manfred, 71229 Leonberg (DE)
(74) Vertreter: Gleiss, Alf-Olav

(57) **Zusammenfassung**

Die Erfindung betrifft eine Haltevorrichtung (1) zur Anordnung eines Längenmessinstruments (2), insbesondere eines Messschiebers (3), im Raum, mit mindestens einer Instrumentenhaltevorrichtung (14) und einer Grundhalterung (5). Es ist vorgesehen, dass die Instrumentenhaltevorrichtung (14) als Klemmvorrichtung (9) ausgebildet ist und die Grundhalterung (5) eine Bezugsebene (44) aufweist.

## Beschreibung

Die Erfindung betrifft eine Haltevorrichtung zur Anordnung eines Längenmessinstruments, insbesondere eines Messschiebers, im Raum, mit mindestens einer Instrumentenhaltevorrichtung und einer Grundhalterung.

Längenmessinstrumente wie beispielsweise Messschieber werden vielfältig verwendet. Insbesondere in der industriellen beziehungsweise Serien-Fertigung werden sie beispielsweise in der Qualitätskontrolle oder bei diffizilen Montagearbeiten für Serienmessungen verwendet, wobei eine Vielzahl von Messobjekten mit hoher Genauigkeit und reproduzierbar gemessen werden muss. Hierbei ist die teilweise umständliche Handhabung der sehr empfindlichen Längenmessinstrumente, wie beispielsweise Messschieber, hinderlich. Nicht nur, dass durch die Freihand-Messung eine Gefahr für die empfindlichen Messinstrumente besteht, vielmehr ist auch die Genauigkeit und Reproduzierbarkeit der einzelnen Längenmessungen durch möglicherweise unterschiedliches oder in einem Winkel erfolgendes Anlegen der Messkluppen des Längenmessinstrumentes an das Objekt nicht gewährleistet.

Aufgabe der Erfindung ist es, eine Lösung bereitzustellen, die solche Nachteile vermeidet.

Hierzu ist eine Haltevorrichtung zur Anordnung eines Längenmessinstruments, insbesondere eines Messschiebers, im Raum, vorgesehen, die mindestens eine Instrumentenhaltevorrichtung und eine Grundhalterung aufweist, wobei die Instrumentenhaltevorrichtung als Klemmvorrichtung ausgebildet ist und die Grundhaltevorrichtung eine Bezugsebene aufweist. Mit Instrumentenhaltevorrichtung ist eine solche Vorrichtung gemeint, die das Längenmessinstrument aufnimmt. Die Ausbildung als Klemmvorrichtung lässt es zu, dass unterschiedliche Längenmessinstrumente mit ein und derselben Vorrichtung verwendet werden können, sofern sie im Wesentlichen gleichartig aufgebaut sind beziehungsweise ähnliche Dimensionen aufweisen. Die Grundhaltevorrichtung bewirkt den apparativen Zusammenhalt der einzelnen Elemente der Vorrichtung als solcher. Diese weist eine Bezugsebene auf, um eine für Folge- und Serienmessungen eindeutige Referenz zu erhalten.

In einer Ausführungsform der Erfindung ist vorgesehen, dass die Grundhaltevorrichtung eine Grundplatte ist. Die einzelnen Elemente der Vorrichtung werden demzufolge auf einer Grundplatte angeordnet, die nicht nur den räumlich-mechanischen Zusammenhalt der Vorrichtung bewirkt, sondern vorzugsweise durch ihre massive, zum Beispiel metallene, Ausgestaltung und das damit einhergehende Gewicht auch eine ausreichende Stabilität verleiht.

In einer bevorzugten Ausführungsform der Erfindung ist vorgesehen, dass die Bezugsebene von einer Fläche der Grundplatte gebildet wird. So ist es beispielsweise möglich, die Oberseite der Grundplatte als eine ebene Bezugsfläche auszubilden, die als Auflage beziehungsweise Anlage für die zu messenden Objekte bei Folge- und Serienmessungen dient. Die Grundplatte kann auch in einer anderweitig ebenen, flächigen Ausgestaltung vorliegen, wobei die Bezugsebene aber nicht planparallel zu der Ebene ist, auf der die gesamte Vorrichtung steht. Insbesondere kann die Bezugsebene hierbei schräg ausgebildet sein.

In einer weiteren Ausführungsform ist vorgesehen, dass das Längenmessinstrument von der Instrumentenhaltevorrichtung in einer Arbeitsebene gehalten wird, die nicht planparallel zur Bezugsebene ist. Insbesondere kann diese zur Bezugsebene hin geneigt sein, um eine bessere Ablesbarkeit des Längenmessinstruments zu gewährleisten.

In einer weiteren bevorzugten Ausführungsform ist vorgesehen, dass die Klemmvorrichtung eine erste Klemmaufnahme und, zu dieser beabstandet, eine zweite Klemmaufnahme aufweist. Hierdurch ist es möglich, ein Längenmessinstrument beispielsweise an seinem vorderen und mit der zweiten Klemmaufnahme an seinem hinteren Ende zu fixieren, so dass eine präzise Aufnahme innerhalb der Klemmvorrichtung gewährleistet ist.

In einer besonders bevorzugten Ausführungsform ist vorgesehen, dass die zweite Klemmaufnahme relativ zur ersten Klemmaufnahme verschiebbar ist, beispielsweise über eine Führung/Nut oder einer ähnlich geeigneten Einrichtung in der Grundplatte. Mit einer solchen Ausführung der Klemmvorrichtung ist es möglich, auch kompliziert geformte Längenmessinstrumente sicher zu fixieren, respektive Längenmessinstrumente unterschiedlicher Länge in ein- und derselben Vorrichtung sicher zu fixieren und zur Messung bereit zu stellen. Beispielsweise ist es so möglich, einen Messschieber an seinem vorderen Ende, bevorzugt nämlich an seiner oberen, nicht verschiebbaren Messkluppe, sowie an seinem hinteren Ende, nämlich dem Ende der Messskala, zu fixieren, wobei durch die Verschiebbarkeit dem Umstand Rechnung getragen wird, dass Messschieber unterschiedliche Längen haben können. Wird der Messschieber mit der oberen, nicht verschiebbaren Messkluppe in die erste Klemmaufnahme, mit seinem hinteren Ende, nämlich dem Ende der Messskala hingegen in der verschiebbaren Klemmaufnahme befestigt, kann bei jeweils gleichsinniger und hinsichtlich der oberen, nicht verschiebbaren Messkluppe eine stets gleichbleibende Handhabung und Positionierung erreicht werden, auch dann, wenn unterschiedlich lange Messschieber mit unterschiedlichen Messbereichen zum Einsatz kommen, da lediglich die zweite, verschiebbare Klemmvorrichtung den unterschiedlichen Längen der Messschieber Rechnung tragen muss, wohingegen die erste Klemmvorrichtung stets die nicht verschiebbare Messkluppe fixiert.

In einer weiteren bevorzugten Ausführungsform ist vorgesehen, dass die Instrumentenhaltevorrichtung eine Verschwenkeinrichtung aufweist. Mit Verschwenkeinrichtung ist eine solche Einrichtung gemeint, die ein Verschwenken beziehungsweise Herausklappen der Instrumentenhaltevorrichtung und/oder des darin gehaltenen Messinstruments aus der für den Messvorgang vorgesehenen Ebene heraus erlaubt, wobei die Verschwenkung in verschiedenen Ebenen erfolgen kann.

In einer weiteren bevorzugten Ausführungsform ist vorgesehen, das die Verschwenkeinrichtung relativ zur Bezugsebene parallel verschwenkbar ist. Dies bedeutet, dass beispielsweise ein Messschieber in der von den Messkluppen gebildeten Ebene in Messstellung liegend, aus dieser heraus um eine Achse geschwenkt werden kann, die die Messebene relativ zur Bezugsebene parallel verändert. Dies ist insbesondere dann hilfreich, wenn immer wieder gleichartige Objekte gemessen werden, die zum Zweck der Messung auf der Bezugsebene, die von der Grundplatte gebildet wird, auf- oder angelegt werden. Bei einem solchen Messvorgang wird der Messschieber lediglich geöffnet, aus der Messebene herausgeschwenkt, das Messobjekt auf die Bezugsebene gelegt, der Messschieber zurückgeschwenkt und geschlossen. Sodann kann mit hoher Präzision das Messergebnis abgelesen werden. Aufgrund der dauernd gleichartigen, mechanisch stabil fixierten Anordnung ist eine hohe Genauigkeit und Reproduzierbarkeit der Ergebnisse gewährleistet.

In einer weiteren Ausführungsform der Erfindung ist vorgesehen, dass die Klemmaufnahmen mehrteilig ausgebildet sind. Dies bedeutet, dass die Klemmaufnahmen mindestens einen ersten und einen zweiten Klemmblock umfassen, wobei diese durch geeignete Einrichtungen, beispielsweise eine Verschraubung, die etwa als Flügelschraube ausgebildet sein kann, sowie gegebenenfalls durch geeignete Führungsprofile, in einer für die Fixierung des Messinstruments erforderlichen und geeigneten Lage eindeutig gehalten werden können, hierbei aber ein ausreichend großes Spiel zur Aufnahme unterschiedlicher Längenmessinstrumente lassen.

Die Erfindung wird im Folgenden anhand von Zeichnungen näher erläutert.

Es zeigen
- Figur 1: eine Haltevorrichtung in Frontalsicht;
- Figur 2: zeigt eine zweite Klemmvorrichtung;
- Figur 3: zeigt eine zweite Klemmvorrichtung mit einer Schwenkeinrichtung;
- Figur 4: zeigt eine Einrichtung zur Verschiebung der zweiten Klemmaufnahme in Aufsicht, und
- Figur 5: zeigt eine ebensolche im Schnitt.

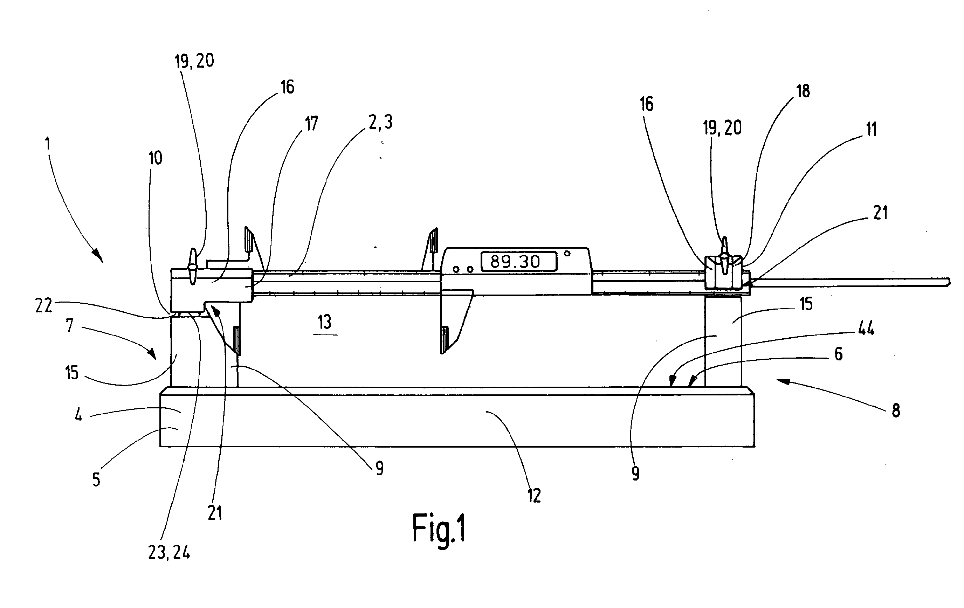

Figur 1 zeigt eine Haltevorrichtung 1 zur Anordnung eines Längenmessinstruments, insbesondere eines Messschiebers, im Raum. In diese ist der Anschaulichkeit halber ein Längenmessinstrument 2, nämlich ein Messschieber 3, in Arbeitsposition eingespannt. Die Haltevorrichtung 1 weist eine als Grundplatte 4 ausgebildete Grundhalterung 5 aus. Die Grundplatte 4 weist eine Oberseite 6 auf, an deren einem, linken Ende 7 sowie an dem diesem gegenüberliegenden, rechten Ende 8 eine Klemmvorrichtung 9 ausgebildet ist, die eine erste Klemmaufnahme 10 und eine zweite Klemmaufnahme 11 aufweist. Die Klemmvorrichtung 9 ist im Wesentlichen, aber nicht notwendig senkrecht zur Oberseite 6 der Grundplatte 4 angeordnet, und beabstandet zu einer Vorderseite 12 der Grundplatte 4, also auf der Oberseite 6 der Grundplatte 4 nach hinten, nämlich von der Vorderseite 12 weg, angeordnet. Die erste Klemmaufnahme 10 der Klemmvorrichtung 9 ist dem linken Ende 7, die zweite Klemmaufnahme 11 hingegen dem rechten Ende 8 zugeordnet. Zwischen der ersten Klemmaufnahme 10 und der zweiten Klemmaufnahme 11 ergibt sich somit oberhalb der Oberseite 6 ein Arbeitsraum 13. Die Klemmvorrichtung 9 bildet eine Instrumentenhaltevorrichtung 14 für das Längenmessinstrument 2 aus. Die Oberseite 6 der Grundplatte 4 bildet eine Bezugsebene 44 aus, über die ein im Arbeitsraum 13 zu vermessendes Objekt räumlich eindeutig angeordnet werden kann.

Die Klemmaufnahmen 10,11 weisen jeweils ein Säulenelement 15 auf, das auf der Oberseite 6 der Grundplatte 4 befestigt/angeordnet ist. Zur Ausbildung der Klemmvorrichtung 9, nämlich der ersten Klemmaufnahme 10 beziehungsweise der zweiten Klemmaufnahme 11 ist jeweils weiter ein Pratzen 16 vorgesehen, nämlich ein erster Spannpratzen 17, der der ersten Klemmaufnahme 10 zugeordnet ist, und ein zweiter Spannpratzen 18, der der zweiten Klemmaufnahme 11 zugeordnet ist. Die Pratzen 16 werden mittels je einer Klemmschraube 19, die vorzugsweise als Flügelschraube 20 ausgebildet ist, mit dem jeweiligen Säulenelement 15 verschraubt. Die Pratzen 16 sehen jeweils eine Aussparung 21 vor, die der Aufnahme des Längenmessinstruments 2 in der Klemmvorrichtung 9 dient. Zur Überbrückung eines verbleibenden Spaltes 22 zwischen dem Säulenelement 15 und dem Pratzen 16 ist ein elastisches Distanzstück 23 vorgesehen, das beispielsweise in der Art einer elastischen, beispielsweise Gel-artigen, Unterlegscheibe 24 ausgebildet sein kann. Diese überbrückt nicht nur verbleibende Spalte zwischen dem Säulenelement 15 und dem Pratzen 16, sondern bewirkt auch eine weiche, elastische Spannung des Längenmessinstruments 2 in der jeweiligen ersten beziehungsweise zweiten Klemmaufnahme 10,11.

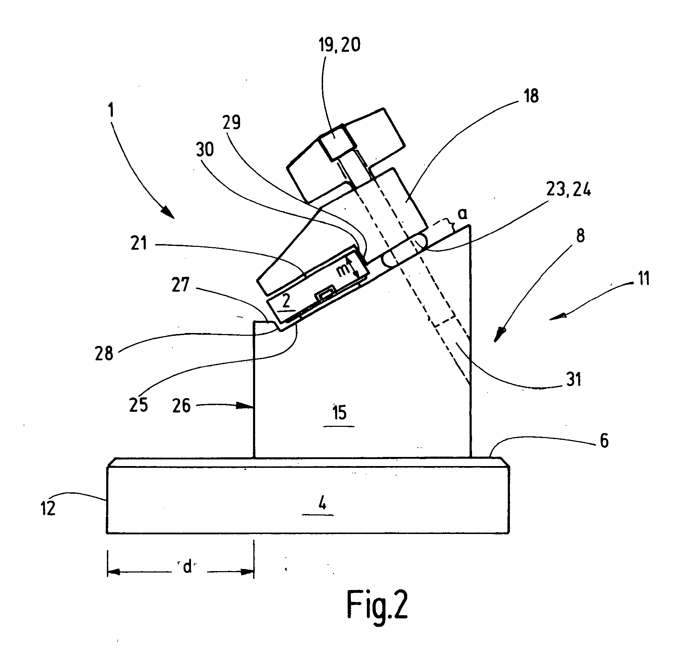

Figur 2 zeigt eine zweite Klemmaufnahme 11 und deren Anordnung auf der Grundplatte 4 von dem rechten Ende 8 der Haltevorrichtung 1 in Seitenansicht. Auf der Oberseite 6 der Grundplatte 4 ist mit einem Abstand d zur Vorderseite 12 der Grundplatte 4 das Säulenelement 15 angeordnet, dem der zweite Spannpratzen 18 vermittels der Klemmschraube 19, die als Flügelschraube 20 ausgebildet ist, unter Zwischenlage des elastischen Dinstanzstücks 23, das in Form einer Unterlagscheibe 24 ausgebildet ist, zugeordnet ist. Der zweite Spannpratzen 18 weist die Aussparung 21 auf, in die, auf einer Aufnahmeebene 25 des Säulenelements 15, das Längenmessinstrument 2 angeordnet ist. Das Säulenelement 15 weist in Richtung seines der Vorderseite 12 der Grundplatte 4 zugewandten, vorderen Endes 26 eine im Wesentlichen rechtwinklig zur Aufnahmeebene 25 vorspringende Nase 27 auf, die einen unteren Anschlag 28 für das Längenmessinstrument 2 ausbildet. Die Aussparung 21 des zweiten Spannpratzens 18 weist an ihrem rückwärtigen, dem Bereich der Klemmschraube 19 zugewandten Endbereich 29 einen im Wesentlichen rechtwinklig zur Aufnahmeebene 25 stehenden Verlauf auf, der als oberer Anschlag 30 für das Längenmessinstrument 2 fungiert. Im Säulenelement 15 ist in einer Bohrung 31 ein zu der Klemmschraube 19 passender, nicht dargestellter Gewindegang vorgesehen, der ein Verschrauben der Klemmschraube 19 und damit ein Einspannen des Längenmessinstruments 2 zwischen dem Säulenelement, aufliegend auf der Aufnahmeebene 25, und dem zweiten Spannpratzen 18, gehalten im Bereich der Aussparung 21 und vom oberen Anschlag 30 fixiert, zulässt. Der sich hierbei durch die Dicke m des Längenmessinstruments 2 zwangsläufig ergebende, verbleibende Klemmbereich a in dem nicht der Aussparung 21 des zweiten Spannpratzens 18 zugeordneten Teil des zweiten Spannpratzens 18 und dem Säulenelement 15 wird flexibel von dem elastischen Dinstanzstück 23 ausgeführt. Hierdurch ist eine sehr feinfühlige, gleichwohl sichere Fixierung des Längenmessinstruments 2 zwischen dem Säulenelement 15 und dem zweiten Spannpratzen 18 sichergestellt. Die Bohrung 31 kann im Übrigen als Sackbohrung oder auch als durchgehende Bohrung ausgeführt sein; erfindungsrelevant ist lediglich, dass sich das Längenmessinstrument 2 zwischen dem Säulenelement 15 und dem zweiten Spannpratzen 18 mit ausreichend Gewindegängen mittels der Klemmschraube 19 fixieren lässt.

Die erste Klemmaufnahme 10 ist im Übrigen entsprechend ausgeführt; die hier für die zweite Klemmaufnahme 11 geschilderten Zusammenhänge gelten entsprechend auch für die erste Klemmaufnahme 10.

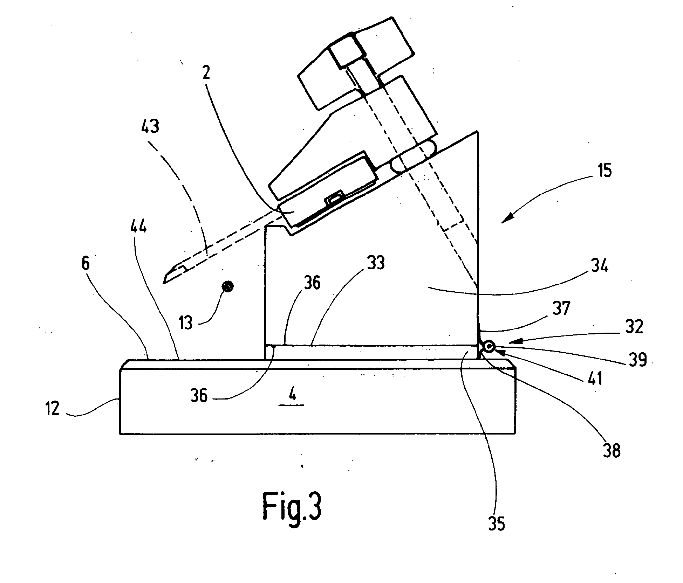

Figur 3 zeigt das selbe Element wie Figur 2, wobei dieses um eine Klappeinrichtung 32 erweitert ist. Die übrigen, in Figur 2 beschriebenen Elemente werden hier der Übersichtlichkeit halber nicht noch einmal erläutert, sofern nicht zum Verständnis erforderlich.

Die Klappeinrichtung 32 besteht im Wesentlichen darin, dass das Säulenelement 15 einen Schnitt 33 aufweist, der das Säulenelement 15 in eine Obersäule 34 und eine Untersäule 35 trennt. Der Schnitt 33 weist planparallele Stoßflächen 36 auf, die jeweils zur Obersäule 34 und zur Untersäule 35 gehören, und diese einander zugewandt sind. Die Stoßflächen 36 der Obersäule 34 beziehungsweise der Untersäule 35 sind zueinander planparallel. Die Obersäule 34 und die Untersäule 35 werden durch die Klappeinrichtung 32 miteinander verbunden. Hierzu ist an der Obersäule 34 ein erstes Band 37, an der Untersäule 35 ein zweites Band 38 angelenkt. Diese bilden zusammen mit einer Drehachse 39, die in einer o-förmigen Augenausbildung 40 münden, ein Scharnier 41. Das Scharnier 41 erlaubt das Wegklappen der Obersäule 34 von der Untersäule 35 um die Drehachse 39, so dass die Stoßflächen 36 sich im Schnitt 33 trennen. Um die Drehachse 39 wir folglich die Obersäule 34 nach hinten, also von der Vorderseite 12 der Grundplatte 4 aus betrachtet, weggekippt. Die erste Klemmaufnahme 10 weist eine gleicher Art ausgeführte Klappeinrichtung 32 auf. Mit einem eingespannten Längenmessinstrument 2 werden folglich beide Klemmaufnahmen 10,11, mithin die gesamte Klemmvorrichtung 9, um die Drehachse 39 mitsamt dem Längenmessinstrument 2, über das die erste Klemmaufnahme 10 mit der zweiten Klemmaufnahme 11 hinsichtlich dieser Kipp- beziehungsweise Drehbewegung wirkverbunden sind, weggeschwenkt. Diese an der Klemmeinrichtung 9 ausgebildeten Klappeinrichtungen 32 bilden die Verschwenkeinrichtung 42 der Instrumentenhaltevorrichtung 14. Zusätzlich zur Darstellung in Figur 2 sind in Figur 3 die Messklappen 43 des Längenmessinstruments 2 schematisch dargestellt. Diese ragen in den in Figur 1 beschriebenen Arbeitsraum und begrenzen ihn nach oben. Die Verschwenkeinrichtung 42 gestattet das Wegschwenken der Messklappen 43 aus dem Bereich des Arbeitsraumes 13, nämlich nach hinten. Auf diese Weise ist ein sehr einfaches Auflegen von zu messenden Objekten auf die Oberseite 6 der Grundplatte 4 möglich; die Oberseite 6 bildet für die Messungen und zu deren einfacheren Reproduzierbarkeit die Bezugsebene 44.

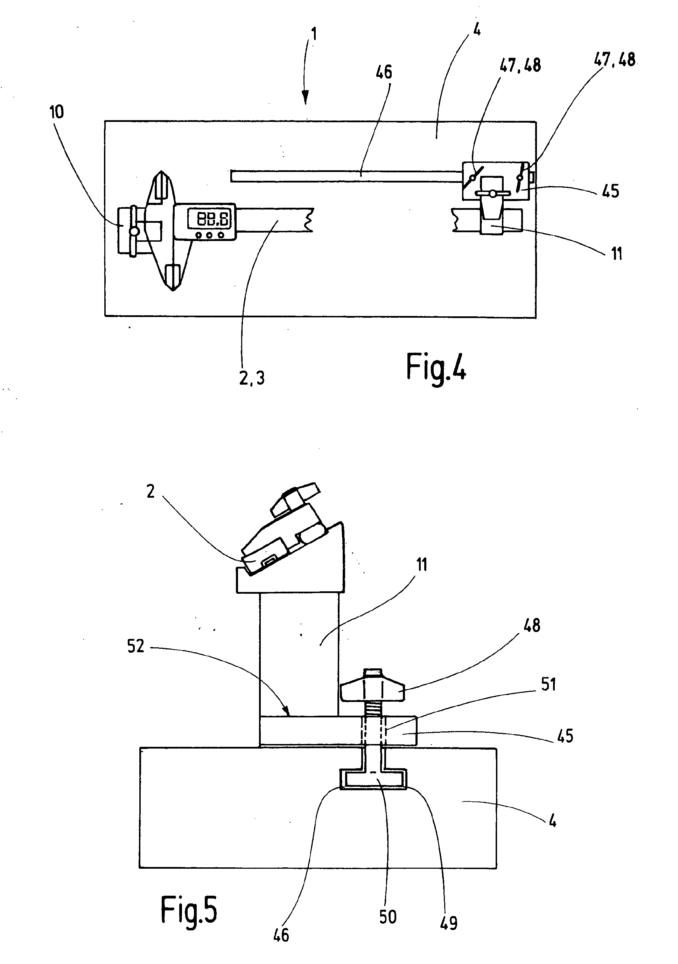

Figur 4 zeigt die Grundplatte 4 mit einer Einrichtung zur Verschiebung der zweiten Klemmaufnahme relativ zur ersten Klemmaufnahme.

Figur 4 zeigt eine erfindungsgemäße Haltevorrichtung 1 in Aufsicht. Dargestellt ist ein (geschnittenes) Längenmessinstrument 2, nämlich ein Messschieber 3, der linksseitig von einer ersten Klemmaufnahme 10 und rechtseitig von einer zweiten Klemmaufnahme 11 gehalten wird. Die zweite Klemmaufnahme 11 steht nicht auf der Grundplatte 4, sondern auf einem dieser zugeordneten, auf ihr aufstehenden Schiebebock 45. Der Schiebebock 45 ist in einer in die Grundplatte 4 eingelassenen Längsführung 46 geführt, die beispielsweise eingefräst oder in einer sonstigen geeigneten Art vertieft in die Grundplatte 4 eingebracht sein kann. Der Schiebebock 45 trägt die zweite Klemmaufnahme 11, die somit über den Schiebebock 45 innerhalb der Längsführung 46 relativ zur Längsausdehnung der Grundplatte 4 verschiebbar angeordnet ist. Der Schiebebock 45 weist eine geeignete Befestigungsvorrichtung auf, die aufgrund der Aufsicht hier nur teilweise gezeigt ist, nämlich durch die Fixierschrauben 47, die beispielsweise als Flügelmuttern 48 ausgebildet sein können. Selbstverständlich sind auch andere Verschiebevorrichtungen denkbar, die eine in Längsrichtung erfolgende, geeignete Längsverstellung der zweiten Klemmaufnahme 11 zum Gegenstand haben.

Figur 5 zeigt die Grundplatte 4 mit dem Schiebebock 45, der Längsführung 46 und der zweiten Klemmaufnahme 11 im Querschnitt. Die Längsführung 46 ist als eine T-Nut 49 ausgeführt, in die eine Fixierschraube 50 verschiebbar eingesetzt ist, die den Schiebebock 45 mittels einer Fixierbohrung 51 durchdringt. An einer Oberseite 52 des Schiebebocks 45 ist die Flügelmutter 48 auf die als Fixierschraube 47 ausgebildete Führschraube 50 aufgesetzt und dient zum Fixieren/Verschrauben des Schiebebocks 45 auf der Grundplatte 4, entsprechend den Gegebenheiten des eingesetzten Längenmessinstruments 2, nämlich insbesondere abhängig von dessen Länge. Der Schiebebock 45 dient in seiner Verstellbarkeit als Aufnahme der zweiten Klemmaufnahme 11 nicht nur dazu, das Längenmessinstrument 2 in voller Länge nutzbar zu machen; vielmehr ist es auch möglich, ein gegebenes Längenmessinstrument 2 kürzer als erforderlich einzuspannen, um eine höhere Rigidität der Anordnung zu erreichen.

### BEZUGSZEICHENLISTE

- 1: Haltevorrichtung
- 2: Längenmessinstrument
- 3: Messschieber
- 4: Grundplatte
- 5: Grundhalterung
- 6: Oberseite
- 7: linkes Ende
- 8: rechtes Ende
- 9: Klemmvorrichtung
- 10: erste Klemmaufnahme
- 11: zweite Klemmaufnahme
- 12: Vorderseite
- 13: Arbeitsraum
- 14: Instrumentenhaltevorrichtung
- 15: Säulenelement
- 16: Pratzen
- 17: erster Spannpratzen
- 18: zweiter Spannpratzen
- 19: Klemmschraube
- 20: Flügelschraube
- 21: Aussparung
- 22: Spalt
- 23: elastisches Distanzstück
- 24: Unterlegscheibe
- 25: Aufnahmeebene
- 26: vorderes Ende
- 27: Nase
- 28: unterer Anschlag
- 29: Endbereich
- 30: oberer Anschlag
- 31: Bohrung
- 32: Klappeinrichtung
- 33: Schnitt
- 34: Obersäule
- 35: Untersäule
- 36: Stoßflächen
- 37: erstes Band
- 38: zweites Band
- 39: Drehachse
- 40: Augenausbildung
- 41: Scharnier
- 42: Verschwenkeinrichtung
- 43: Messklappen
- 44: Bezugsebene
- 45: Schiebebock
- 46: Längsführung
- 47: Fixierschraube
- 48: Flügelmutter
- 49: T-Nut
- 50: Führschraube
- 51: Fixierbohrung

- d: Abstand
- a: Klemmbereich
- m: Dicke

## Patentansprüche

1. Haltevorrichtung zur Anordnung eines Längenmessinstruments, insbesondere eines Messschiebers, im Raum, mit mindestens einer Instrumentenhaltevorrichtung und einer Grundhalterung, **dadurch gekennzeichnet, dass** die Instrumentenhaltevorrichtung (14) als Klemmvorrichtung (9) ausgebildet ist und die Grundhalterung (5) eine Bezugsebene (44) aufweist.

2. Haltevorrichtung nach Anspruch 1, **dadurch gekennzeichnet, dass** die Grundhalterung (5) eine Grundplatte (4) ist.

3. Haltevorrichtung nach Anspruch 2, **dadurch gekennzeichnet, dass** die Bezugsebene (44) von einer Fläche der Grundplatte (4) gebildet wird.

4. Haltevorrichtung nach Anspruch 2, **dadurch gekennzeichnet, dass** die Instrumentenhaltevorrichtung (14) das Längenmessinstrument (2) in einer Arbeitsebene hält, die nicht planparallel zur Bezugsebene (44) ist.

5. Haltevorrichtung nach einem der vorhergehenden Ansprüche, **dadurch gekennzeichnet, dass** die Klemmvorrichtung (9) eine erste Klemmaufnahme (10) und, zu dieser beabstandet, eine zweite Klemmaufnahme (11) aufweist.

6. Haltevorrichtung nach einem der vorhergehenden Ansprüche, **dadurch gekennzeichnet, dass** die Klemmaufnahmen (10,11) jeweils mindestens eine Klemmschraube (19) aufweisen.

7. Haltevorrichtung nach einem der vorhergehenden Ansprüche, **dadurch gekennzeichnet, dass** die Klemmschraube (19) durch ein elastisches Distanzstück (23) gefertigt wird.

8. Haltevorrichtung nach einem der vorhergehenden Ansprüche, **dadurch gekennzeichnet, dass** die zweite Klemmaufnahme (11) relativ zur ersten Klemmaufnahme (10) verschiebbar ist.

9. Haltevorrichtung nach einem der vorhergehenden Ansprüche, **dadurch gekennzeichnet, dass** die Instrumentenhaltevorrichtung (14) eine Verschwenkeinrichtung (42) aufweist.

10. Haltevorrichtung nach einem der vorhergehenden Ansprüche, **dadurch gekennzeichnet, dass** die Verschwenkeinrichtung (42) relativ zur Bezugsebene (44) parallel verschwenkbar ist.

11. Haltevorrichtung nach einem der vorhergehenden Ansprüche, **dadurch gekennzeichnet, dass** die Klemmaufnahmen (10,11) mehrteilig ausgebildet sind.
